# EUROPEAN PATENT APPLICATION

(11) **EP 1 883 007 A1**
(43) Date of publication of application: **30.01.2008**
(21) Application number: 06117514.7
(22) Date of filing: 19.07.2006
(51) Int. Cl.: G06F 3/033

(54) **Ergonomic cursor navigation controller for a handheld mobile communication device**

(71) Applicant: Research In Motion Limited, Waterloo, Ontario N2L 3W8 (CA)
(72) Inventor: Rak, Roman P., Ontario N2T 2V8 (CA)
(74) Representative: Hibbert, Juliet Jane Grace

(57) **Abstract**

An ergonomic cursor navigation controller for a handheld mobile communication device generally includes a navigation button having a ringed and waved upper surface and may further include an execution button disposed within a perimeter defined by the ringed and waved upper surface. The navigation button is provided for navigating a cursor about an electronic graphical display of the handheld mobile communication device. The ringed and waved configuration of the controller facilitates improved tactile operation of the controller and reduces the occurrence of pressing incorrect buttons on the handheld mobile communication device.

## Description

### FIELD

The present disclosure relates generally to handheld mobile communication devices, and more particularly, to an ergonomic cursor navigation controller assembly for a handheld mobile communication device.

### BACKGROUND

Handheld mobile communication devices having keyboards and electronic graphical displays are fairly well known. Such devices typically include telephonic and alphanumeric keyboards, e.g. QWERTY keyboards, and electronic graphical displays that allow individuals to undertake and complete a variety of electronic communications functions and/or tasks. For example, using such handheld mobile devices, users can send and receive phone messages, check voicemail, send and receive electronic mail messages (email), browse the Internet, store and transmit data such as contact information, schedule appointments, utilize calculators, take and send and receive photographs, play video games, and the like. To facilitate these various functions, such devices typically include cursor navigation controller assemblies that allow individuals to move a cursor about the electronic graphical display and select a desired function to be performed; e.g., make a phone call, view an electronic mail message, send an electronic mail message, change a device setting, and the like.

In some known devices, such tasks are accomplished by means of a scroll-wheel or thumbwheel, which can be rotated to navigate between the various functions. The thumbwheel can then be pressed to execute the selected function.

While some devices currently utilize scroll-wheels or thumbwheels both to navigate between and cause execution of functions to be performed, other devices utilize separate ringed (e.g., loop-shaped) buttons and execution buttons for navigating between desired functions to be performed and causing execution of the selected function. Typically, the ringed button surrounds the execution button and is used to directionally dispose the cursor about the electronic graphical display; the execution button is then pressed to cause execution of the selected function to be performed. The ringed button generally allows a user to navigate (cause to move) a cursor up or down or left or right on the corresponding electronic graphical display and the separate execution button is used for causing the desired function to be performed.

While known cursor navigation controller assemblies having ringed navigation buttons in combination with separate execution buttons are generally sufficient for accomplishing their intended tasks, they are not ergonomically designed for efficient use, especially in view of the increasing popularity of smaller and smaller handheld mobile communication devices. Indeed, as the size of such devices has decreased, the various buttons used to input information and operate the devices (e.g., left and right "mouse" buttons, telephone buttons, alphanumeric keyboard keys or buttons, cursor navigation controller buttons, etc.) have become more and more crowded. As a result, it is not uncommon for users to inadvertently press a wrong button, or to press the left or right mouse buttons, keys of the keyboard, etc., when attempting to use known cursor navigation controller assemblies. Similarly, when pressing the left or right mouse buttons, keys of the keyboard and the like it is not uncommon for users to inadvertently press the cursor navigation controller assembly.

These problems are amplified when the height of the cursor navigation controller assembly is the same as that of the other input buttons and/or all of the input buttons are flush with one another. Indeed, when the mouse buttons, keyboard keys, phone on/off buttons, or cursor navigation controller assemblies and the like are flush with one another or are disposed at approximately the same height, it can be difficult to tactilely differentiate between the various buttons. Thus, several buttons inadvertently can be simultaneously pressed or the wrong buttons can be pressed altogether. This is especially problematic when the attention of a user may be diverted from the immediate task at hand; that is, when the user is not looking at the device when pressing input buttons.

While some have attempted to address the above-described problems by providing raised surfaces on cursor navigation controller assemblies, such solutions have been largely insufficient. For example, one solution has been to provide a flat, planar ringed loop or annulus that circumscribes the execution button, but which is raised above the surface of the execution button and/or adjacent input buttons. This solution, however, does not provide the user with sufficient means to tactilely ascertain the actual navigational direction when the ringed button is touched.

Similarly, other solutions have included the addition of surface protrusions that abruptly protrude from the flat, planar surface of the ringed buttons; examples of such abrupt raised surface protrusions include raised arrows that point in directions that are up, down, left, or right and/or pin or stud members that protrude from the surfaces of such buttons. Such protrusions, however, are usually not sufficient to enable users to tactilely determine the actual direction described by the surface protrusion. Furthermore, some protrusions include painted surfaces that, along with the protrusions themselves, have a tendency to wear out. Wear of the protrusions or their surfaces can render them wholly ineffective for their intended purpose or generally unsightly.

### BRIEF DESCRIPTION OF THE DRAWINGS

Embodiments of an ergonomic cursor navigation controller assembly for a handheld mobile communication device will now be described in detail with reference to the appended drawings in which:

FIG. 1 is a front perspective view of an exemplary embodiment of a handheld mobile communication device including an ergonomic cursor navigation controller assembly;

FIG. 2 is front elevational view of an exemplary embodiment of an ergonomic cursor navigation controller assembly for a handheld mobile communication device shown cradled in a user's hand;

FIG. 3 is an exploded perspective view of an exemplary wireless handheld electronic device incorporating an ergonomic cursor navigation controller assembly as at the auxiliary input;

FIG. 4 is a block diagram representing a wireless handheld communication device interacting in a communication network;

FIG. 5 illustrates an exemplary QWERTY keyboard layout;

FIG. 6 illustrates an exemplary QWERTZ keyboard layout;

FIG. 7 illustrates an exemplary AZERTY keyboard layout;

FIG. 8 illustrates an exemplary Dvorak keyboard layout;

FIG. 9 illustrates a QWERTY keyboard layout paired with a traditional ten-key keyboard;

FIG. 10 illustrates ten digits comprising the numerals 0-9 arranged as on a telephone keypad, including the * and # astride the zero;

FIG. 11 illustrates a numeric phone key arrangement according to the ITU Standard E.161 including both numerals and letters;

FIG. 12 is a front view of an exemplary handheld electronic device including a full QWERTY keyboard as known in the art;

FIG. 13 is a front view of another exemplary handheld electronic device including a full QWERTY keyboard as known in the art;

FIG. 14 is a front view of an exemplary handheld electronic device including a reduced QWERTY keyboard;

FIG. 15 is a front view of another exemplary handheld electronic device including a reduced QWERTY keyboard;

FIG. 16 is a detail view of the reduced QWERTY keyboard of device of FIG. 15;

FIG. 17 is a detail view of an alternative reduced QWERTY keyboard;

FIG. 18 is top view of an exemplary embodiment of a handheld mobile communication device comprising an ergonomic cursor navigation controller assembly according to the invention;

FIG. 19 is a bottom view of an exemplary embodiment of a handheld mobile communication device comprising an ergonomic cursor navigation controller assembly according to the invention;

FIGS. 20 and 21 are side views of an exemplary embodiment of a handheld mobile communication device comprising an ergonomic cursor navigation controller assembly according to the invention;

FIG. 22 is a front perspective view of an exemplary embodiment of an ergonomic cursor navigation controller assembly according to the invention;

FIG. 23 is front view of an exemplary embodiment of an ergonomic cursor navigation controller assembly according to the invention;

FIG. 24 is top view of an exemplary embodiment of an ergonomic cursor navigation controller assembly according to the invention;

FIG. 25 is a section view of an exemplary embodiment of an ergonomic cursor navigation controller assembly taken along line 25-25 of FIG. 23;

FIG. 26 is right side view of an exemplary embodiment of an ergonomic cursor navigation controller assembly according to the invention;

FIG. 27 is a section view of an exemplary embodiment of an ergonomic cursor navigation controller assembly taken generally along line 27-27 of FIG. 23;

FIG. 28 is a section view of an exemplary embodiment of an ergonomic cursor navigation controller assembly taken generally along line 28-28 of FIG. 23;

FIG. 29 is a front perspective view of another exemplary embodiment of a handheld mobile communication device comprising an ergonomic cursor navigation controller assembly wherein the ringed navigation controller is round; and,

FIG. 30 is a front perspective view of another exemplary embodiment of a handheld mobile communication device comprising an ergonomic cursor navigation controller assembly wherein the ringed navigation controller is substantially rectangular.

FIG. 31 is a front perspective view of an exemplary embodiment of an ergonomic cursor navigation controller assembly according to the invention wherein one or more peaks has a textured surface.

### DETAILED DESCRIPTION

As intimated hereinabove, one of the more important aspects of the handheld electronic device to which this disclosure is directed is its size. While some users will grasp the device in both hands, it is intended that a predominance of users will cradle the device in one hand in such a manner that input and control over the device can be affected using the thumb of the same hand in which the device is held. Therefore the size of the device must be kept relatively small; of its dimensions, limiting the width of the device is most important with respect to assuring cradleability in a user's hand. Moreover, it is preferred that the width of the device be maintained at less than ten centimeters (approximately four inches). Keeping the device within these dimensional limits provides a hand cradleable unit that users prefer for its useability and portability. Limitations with respect to the height (length) of the device are less stringent with importance placed on maintaining device hand-cradleablability. Therefore, in order to gain greater size, the device can be advantageously configured so that its height is greater than its width, but still remain easily supported and operated in one hand.

A potential problem is presented by the small size of the device in that there is limited exterior surface area for the inclusion of user input and device output features. This is especially true for the "prime real estate" of the front face of the device where it is most advantageous to include a display screen that outputs information to the user and which is preferably above a keyboard utilized for data entry into the device by the user. If the screen is provided below the keyboard, a problem occurs in being able to see the screen while inputting data. Therefore it is preferred that the display screen be above the input area, thereby solving the problem by assuring that the hands and fingers do not block the view of the screen during data entry periods.

To facilitate textual data entry, an alphabetic keyboard is provided. In one version, a full alphabetic keyboard is utilized in which there is one key per letter. This is preferred by some users because it can be arranged to resemble a standard keyboard with which they are most familiar. In this regard, the associated letters can be advantageously organized in QWERTY, QWERTZ or AZERTY layouts, among others, thereby capitalizing on certain users' familiarity with these special letter orders. In order to stay within the bounds of a limited front surface area, however, each of the keys must be commensurately small when, for example, twenty-six keys must be provided in the instance of the English language. An alternative configuration is to provide a reduced keyboard in which at least some of the keys have more than one letter associated therewith. This means that fewer keys can be included which makes it possible for those fewer keys to each be larger than in the instance when a full keyboard is provided on a similarly dimensioned device. Some users will prefer the solution of the larger keys over the smaller ones, but it is necessary that software or hardware solutions be provided in order to discriminate which of the several associated letters the user intends based on a particular key actuation; a problem the full keyboard avoids. Preferably, this character discrimination is accomplished utilizing disambiguation software accommodated within the device. As with the other software programs embodied within the device, a memory and microprocessor are provided within the body of the handheld unit for receiving, storing, processing, and outputting data during use. Therefore, the problem of needing a textual data input means is solved by the provision of either a full or reduced alphabetic keyboard on the presently disclosed handheld electronic device.

Keys, typically of a push-button or push-pad nature, perform well as data entry devices but present problems to the user when they must also be used to affect navigational control over a screen-cursor. In order to solve this problem the present handheld electronic device preferably includes an auxiliary input that acts as a cursor navigational tool and which is also exteriorly located upon the front face of the device. Its front face location is particularly advantageous because it makes the tool easily thumb-actuable like the keys of the keyboard. A particularly usable embodiment provides the navigational tool in the form of a trackball which is easily utilized to instruct two-dimensional screen cursor movement in substantially any direction, as well as act as an actuator when the ball of the trackball is depressible like a button. The placement of the trackball is preferably above the keyboard and below the display screen; here, it avoids interference during keyboarding and does not block the user's view of the display screen during use.

In some configurations, the handheld electronic device may be standalone in that it is not connectable to the "outside world." One example would be a PDA that stores such things as calendars and contact information, but is not capable of synchronizing or communicating with other devices. In most situations such isolation will be detrimentally viewed in that at least synchronization is a highly desired characteristic of handheld devices today. Moreover, the utility of the device is significantly enhanced when connectable within a system, and particularly when connectable on a wireless basis in a system in which both voice and text messaging are accommodated.

In accordance with the solutions presented herein, one embodiment takes the form of an ergonomic cursor navigation controller assembly for a handheld mobile communication device, variously configured as described above, that includes a navigation button having a ringed and smoothly waved upper surface and an execution button disposed within a perimeter defined by the ringed and smoothly waved upper surface. The navigation button is provided for guiding (navigating) a cursor about an electronic graphical display of the handheld mobile communication device and the ringed and smoothly waved upper surface comprises a plurality of peaks and valleys. At least two of the peaks are separated from one another along the ringed smoothly waved upper surface by an angle of ninety degrees (90°). The execution button is provided for causing execution of a function that is selected with the navigation button. In some aspects, the smoothly waved upper surface is substantially in the manner of a sine wave, that is, it is smooth and oscillating.

In one aspect, the ergonomic cursor navigation controller assembly comprises at least four peaks and at least four valleys. In another aspect, the peaks of the navigation button are oriented in a corresponding axial relationship with the electronic graphical display such that actuation of one of the peaks causes corresponding movement of the cursor displayed on the electronic graphical display in one of an upward, downward, leftward or rightward direction. In yet another aspect, the upper surface of the peaks is disposed at a higher elevation relative to an upper surface of the execution button, an input button and/or a keyboard button so as to prevent or minimize the inadvertent actuation of buttons proximate the navigation button. In another aspect, the upper surface of the valleys is disposed at a lower elevation relative to an upper surface of the execution button to similarly prevent or minimize the inadvertent actuation of a button.

In one aspect, the ringed and smoothly waved upper surface forms an ellipse, a circle or is substantially rectangular. In another aspect, the ringed and smoothly waved upper surface is a raised annulus protruding from a base portion of the navigation button. In some aspects, the ringed and smoothed and waved upper surface comprises a touchpad sensor assembly such that general rotational movement relative thereto, as by a thumb or finger of a user, causes corresponding movement of the cursor displayed on the electronic graphical display in upward or downward directions. In other aspects, the ringed and smoothly waved upper surface is configured for rotation relative to the housing of the handheld mobile communication device, whose rotation causes corresponding movement of the cursor displayed on the electronic graphical display in upward or downward directions. In some aspects, the ringed and smoothly waved upper surface is disposed on a front side of the handheld mobile communication device.

Given the embodiments described above, it should still be appreciated that while the instant disclosure describes one or more preferred embodiments of an ergonomic cursor navigation controller assembly, such embodiments are presented solely for purposes of illustration and the scope of the appended claims is not intended to be limited to the specific embodiments described in the instant disclosure or illustrated in the attached figures. Additionally, in the detailed description and claims that follow, it should be appreciated that the term "waved" is intended to refer to a generally undulating surface having alternating peaks and valleys.

As used herein, the term handheld electronic device 300 describes a relatively small device that is capable of being held in a user's hand. It is a broader term that includes devices that are further classified as handheld communication devices 300, which interact with a communications network 319. (Reference numeral 300 is used throughout to refer generally to a handheld device, even where different embodiments are being described. Similarly, other reference numerals (e.g., reference numeral 328 for the navigation tool) are used consistently from one embodiment to another.)

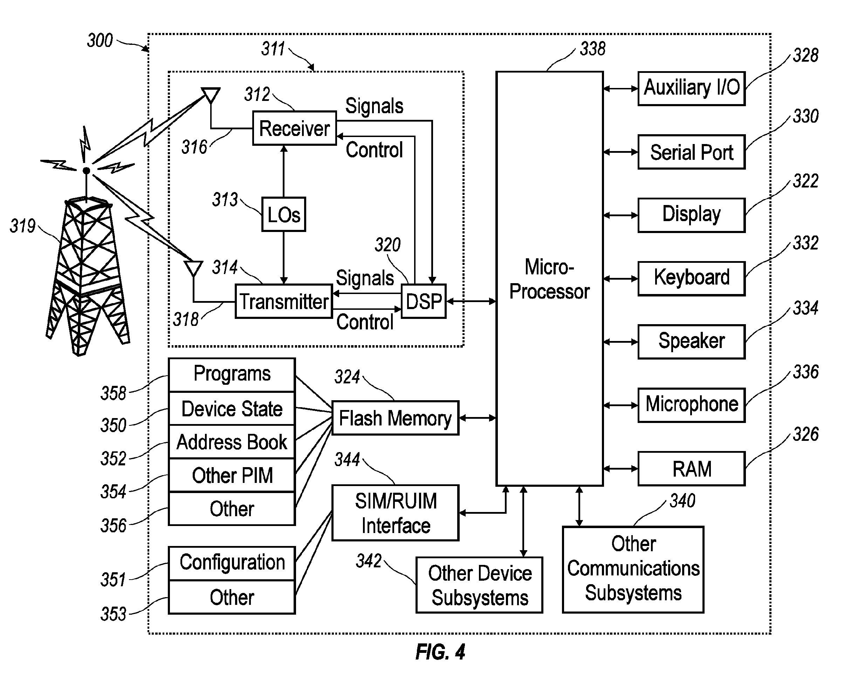

As depicted in FIG. 4, the handheld communication device 300 can transmit data to and receive data from a communication network 319 utilizing radio frequency signals, details of which are discussed more fully hereinbelow. Preferably, the data transmitted between the handheld communication device 300 and the communication network 319 supports voice and textual messaging, although it is contemplated that the method for producing audible sound is equally applicable to single mode devices, i.e. voice-only devices and text-only devices.

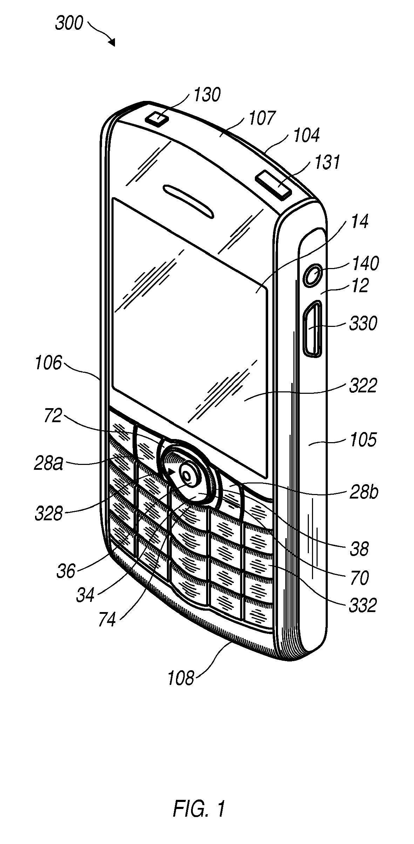

As illustrated in FIG. 1, the handheld electronic device 300 includes a lighted display 322 located above a keyboard 332 suitable for accommodating textual input to the handheld electronic device 300 when in an operable configuration. Preferably, the screen 322 and keyboard 332 are located at the front face of the handheld electronic device 300. As shown, the device 300 is of unibody construction, but it is also contemplated that the device may be of an alternative construction such as that commonly known as "clamshell" or "flip-phone" style. Regardless, in operable configuration of the device 300, the navigation tool (auxiliary input) 328 is located essentially between the display 322 and the keyboard 332.

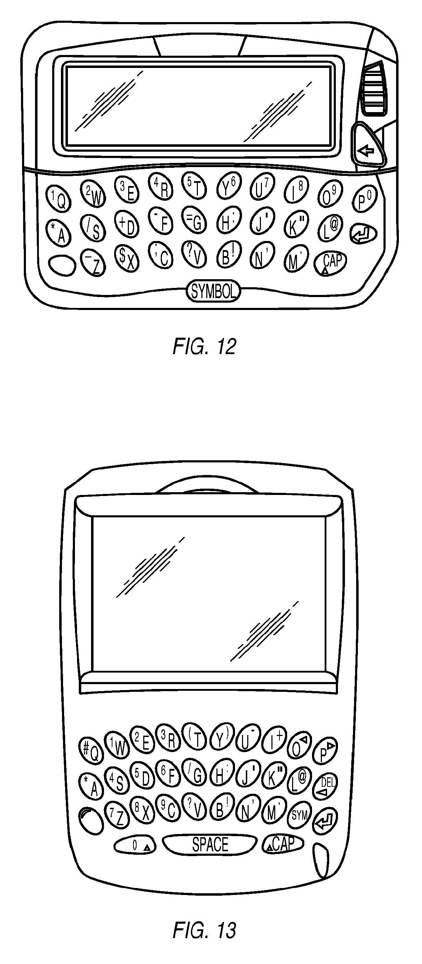

In one embodiment, the keyboard 332 includes a plurality of keys with which alphabetic letters are associated on one-letter-per-key basis. It is contemplated that the keys may be directly marked with letters, or the letters may be presented adjacent to, but clearly in association with, a particular key. Such one-to-one pairing between the letters and keys is depicted in FIGS. 12 and 13 and is described in greater detail below in association therewith. In order to facilitate user input, the alphabetic letters are preferably configured in a familiar QWERTY, QWERTZ, AZERTY, or Dvorak layout, each of which is also discussed in greater detail hereinbelow.

In the alternative embodiment of FIG. 1, the keyboard 332 comprises a plurality of keys with which alphabetic letters are also associated, but at least a portion of the individual keys have multiple letters associated therewith. This type of configuration is referred to as a reduced keyboard (in comparison to the full keyboard described immediately above) and can, among others come in QWERTY, QWERTZ, AZERTY, and Dvorak layouts.

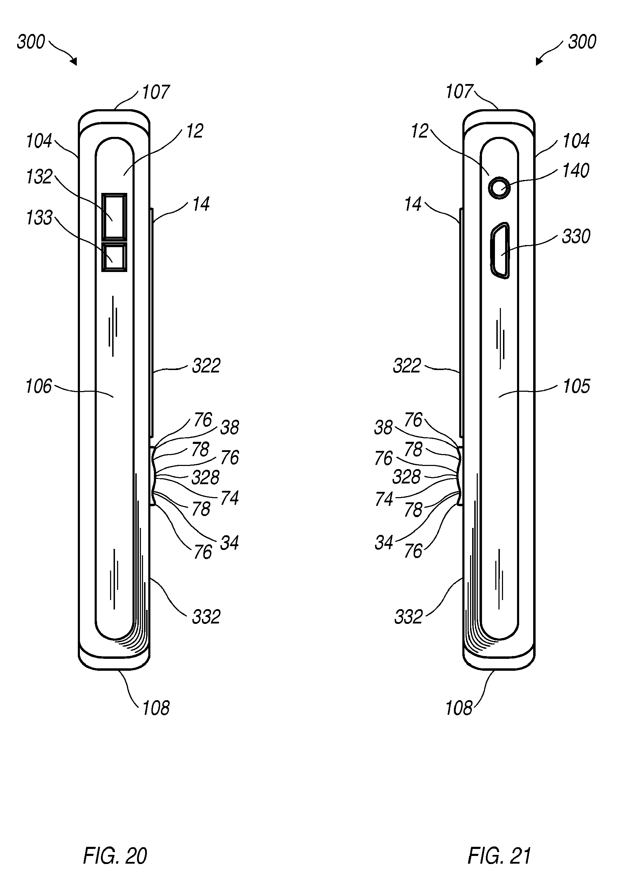

Referring now to FIGS. 1-3 and 18-21, a handheld mobile communication device is generally illustrated by reference numeral 300. In the embodiment illustrated, handheld mobile communication device 300 includes housing 12 having front side 14, rear side 104, top side 107, bottom side 108, and lateral sides 105, 106. In the figures, handheld mobile communication device 300 is illustrated as further including keyboard 332 (which can be a QWERTY or other keyboard), an electronic graphical display 322 (which can be an illuminable LCD display), input buttons 28a, 28b (which may be left and right "mouse" buttons, telephone buttons for initiating or ending a telephone call, keyboard buttons, etc.), and ergonomic cursor navigation controller assembly 328 for navigating a cursor about the electronic graphical display and executing a selected function. The handheld mobile communication device 300 can also include one or more inputs/outputs 330, for example, a USB port for, among other things, providing power to the device, charging a battery, or transferring data to/from another electronic device.

Referring now to FIGS. 1-3 and 18-30, ergonomic cursor navigation controller assembly 328 includes navigation button 34 and execution button 36 and is shown as being disposed between the keyboard 332 and electronic graphical display 322 and between input buttons 28a and 28b. Navigation button 34 includes a raised, ringed or loop-shaped outer portion 38 in the form of a generally raised ellipse, and a generally concave inner portion 70 that extends from the raised ring outer portion 38 toward the execution button 36. In the illustrated embodiment, the raised ring outer portion 38 and the generally concave inner portion 70 surround execution button 36.

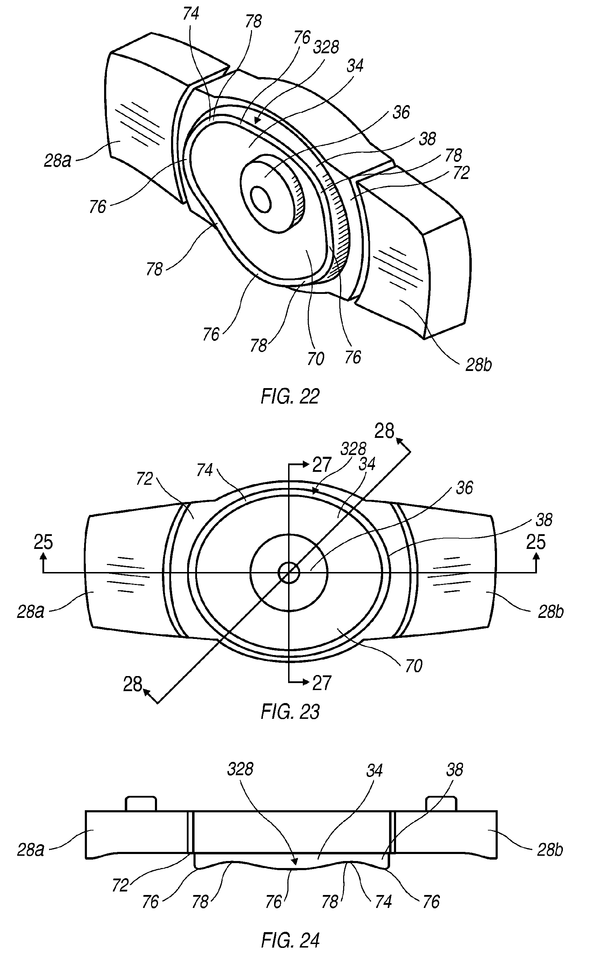

As shown more clearly in FIGS. 22-28, navigation button 34 includes base portion 72 from which raised ring outer portion 38 protrudes. In the illustrated embodiment, raised ring outer portion 38 is shown as extending perpendicularly from base portion 72 and upper surface 74 of raised ring outer portion 38 is shown as comprising a generally smooth, waved surface that forms a number of alternating peaks 76 and valleys 78. In the embodiment illustrated, each of peaks 76 and valleys 78 is elevated relative to the base portion 72. It should be appreciated that while the wave form of the upper surface can be stepped, or include stepped portions, e.g., in the manner of a square wave, a smoothly undulating wave shape is preferred.

Also, in the illustrated embodiment, peaks 76 are circumferentially oriented about the upper surface 74 of raised ring outer surface 38 at ninety degree (90°) intervals such that they correspond with up, down, left, and right movements of a cursor (not shown) displayed on the electronic graphical display 322; that is, where top 107 and bottom 108 of handheld mobile communication device 300 correspond with 0° and 180°, respectively, on hypothetical coordinate axes, peaks 74 of the raised ring portion will be disposed at 0°, 90°, 180°, and 270°, while valleys 78 will generally be disposed at angles of 45°, 135°, 225°, and 315°. Consequently, pressing one of the peaks will cause movement of a cursor (not shown) displayed on the electronic graphical display in a direction that is generally up or down or left or right. Once a desired function is selected, the user presses the execution button to execute the selected function.

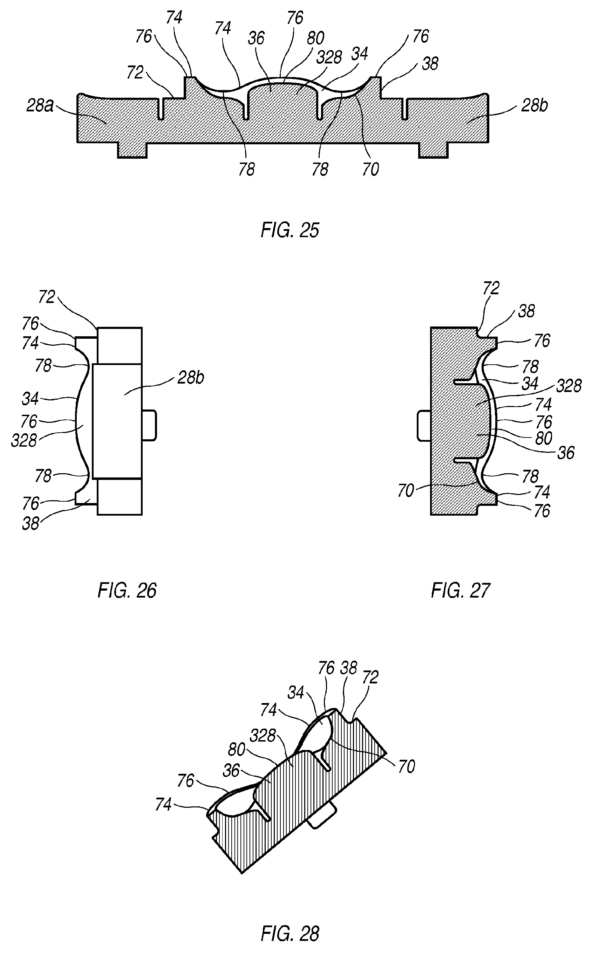

As shown more clearly in FIGS. 25-28, peaks 76 have an elevation that is higher than that of upper surface 80 of execution button 36. Because the peaks of navigation button 34 have an elevation that is higher than that of the upper surface 80 of the execution button 36 and/or any adjacent buttons (e.g., input buttons 28a, 28b and/or keyboard 332 buttons), a user is generally capable of readily tactilely determining the direction of a desired cursor movement using the peaks and can avoid the inadvertent actuation of the adjacent buttons or execution button 36. Additionally, because valleys 78 are disposed at an elevation that is lower than the upper surface 80 of execution button 36, a user can readily move their thumbs or fingers, for example, from one of the input buttons 28a, 28b or keyboard 332 buttons, to the execution button 36 and generally avoid the inadvertent actuation of the navigation button 34. It should be appreciated by those having skill in the art that while the illustrated embodiment shows the execution button, navigation button 34 and input buttons 28a and 28b as being integrally connected with one another, such buttons may be independent and separate from one another.

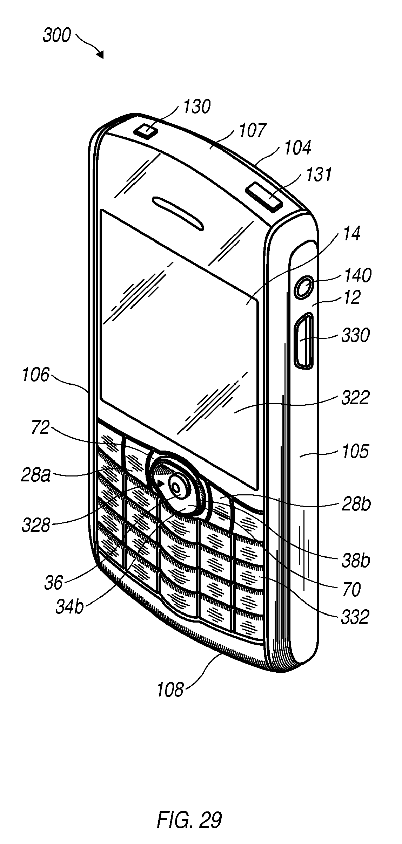

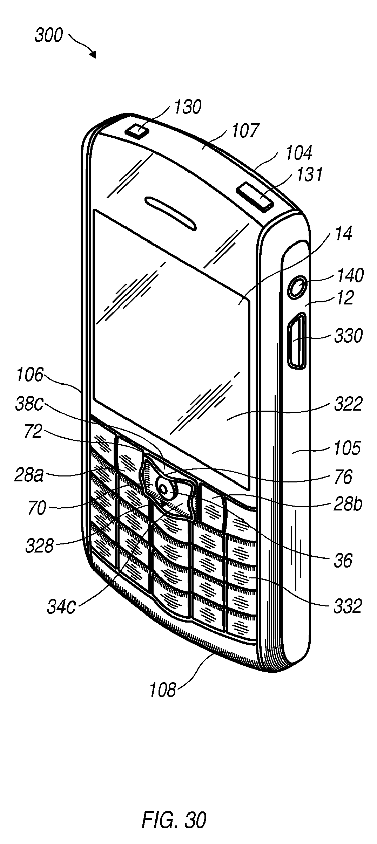

Additionally, while an embodiment comprises a navigation button comprising a raised ring outer surface 38 in the form of an ellipse, as illustrated in FIGS. 29 and 30, ergonomic navigation controller assembly 328 can be circular or substantially rectangular and have corresponding circular (34b) or rectangular (34c) navigation buttons and raised rings (38b, 38c) therefore. Other shapes are contemplated, e.g. square, diamond, etc.

Also, it should also be appreciated that while an ergonomic cursor navigation controller assembly 328 has been described herein for causing movement of a cursor in upward, downward, leftward and rightward directions in response to corresponding actuation of peaks 76 of navigation button 34, the overall device can be configured to allow diagonal movement of a cursor upon actuation of a corresponding valley 78.

Alternatively, navigation button 34 can be configured for rotational movement such that clockwise/counterclockwise rotation thereof causes downward or upward movement of a corresponding cursor displayed on the electronic graphical display. Similarly, navigation button 34 could be configured to comprise a circular touchpad type sensor such that clockwise/counterclockwise rotational movement relative thereto (as by a thumb or finger) causes downward or upward movement of a cursor in a known manner.

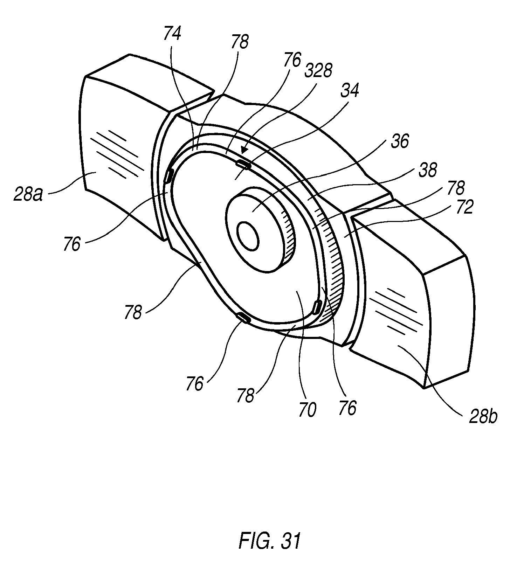

Also, as shown in FIG. 31, one or more peaks of the navigation button can be configured to comprise a textured surface to further aid the user in positionally orienting his/hers fingers or thumbs about the navigation button. For example, the textured surface could comprise knurling or a surface protrusion.

Thus, it is seen that an ergonomic cursor navigation controller assembly for a handheld mobile communication device is efficiently obtained. While various features of an ergonomic cursor navigation controller assembly for a handheld mobile communication device have been disclosed herein in combination with one another, it should be understood that the various features may be used singly or in any combination with one another. Additionally, the embodiments described herein are intended to merely serve as examples of an ergonomic cursor navigation controller assembly for a handheld mobile communication device and it is intended that the instant disclosure enables those skilled in the art to make and use the disclosed embodiments as well as embodiments not explicitly recited herein, but which are encompassed by the appended claims. The intended scope of the claims, thus, includes the disclosed embodiments as well as embodiments not explicitly described in the instant disclosure, but which embodiments do not differ, or differ insubstantially, from the literal language of the appended claims.

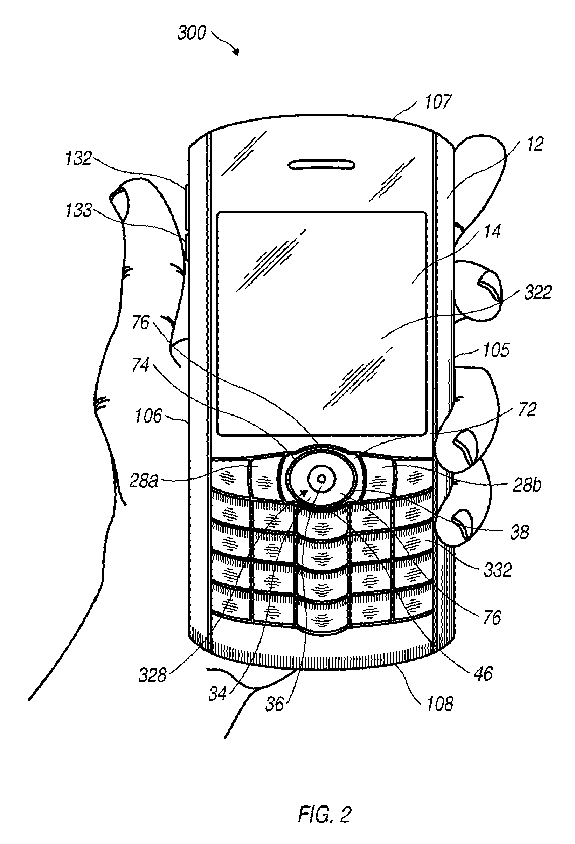

Further aspects of the environments, devices and methods of employment described hereinabove are expanded upon in the following details. An exemplary embodiment of the handheld electronic device 300 as shown in FIG. 2 can be cradled in the palm of a user's hand. The size of the device 300 is such that a user is capable of operating the device using the same hand that is holding the device. In a preferred embodiment, the user is capable of actuating all features of the device 300 using the thumb of the cradling hand. The preferred embodiment of the handheld device 300 features a keyboard 332 on the face of the device 300, which is actuable by the thumb of the hand cradling the device 300. The user may also hold the device 300 in such a manner to enable two thumb typing on the device 300. Furthermore, the user may use fingers rather than thumbs to actuate the keys on the device 300. In order to accommodate palm-cradling of the device 300 by the average person, it is longer (height as shown in FIG. 2) than it is wide, and the width is preferably between approximately two and three inches, but by no means limited to such dimensions.

The handheld electronic device 300 includes an input portion and an output display portion. The output display portion can be a display screen 322, such as an LCD or other similar display device.

The input portion includes a plurality of keys that can be of a physical nature such as actuable buttons or they can be of a software nature, typically constituted by virtual representations of physical keys on a display screen (referred to herein as "software keys"). It is also contemplated that the user input can be provided as a combination of the two types of keys. Each key of the plurality of keys has at least one actuable action which can be the input of a character, a command or a function. In this context, "characters" are contemplated to exemplarily include alphabetic letters, language symbols, numbers, punctuation, insignias, icons, pictures, and even a blank space. Input commands and functions can include such things as delete, backspace, moving a cursor up, down, left or right, initiating an arithmetic function or command, initiating a command or function specific to an application program or feature in use, initiating a command or function programmed by the user and other such commands and functions that are well known to those persons skilled in the art. Specific keys or other types of input devices can be used to navigate through the various applications and features thereof. Further, depending on the application or feature in use, specific keys can be enabled or disabled.

In the case of physical keys, all or a portion of the plurality of keys have one or more indicia displayed at their top surface and/or on the surface of the area adjacent the respective key, the particular indicia representing the character(s), command(s) and/or function(s) typically associated with that key. In the instance where the indicia of a key's function is provided adjacent the key, it is understood that this may be a permanent insignia that is, for instance, printed on the device cover beside the key, or in the instance of keys located adjacent the display screen, a current indicia for the key may be temporarily shown nearby the key on the screen.

In the case of software keys, the indicia for the respective keys are shown on the display screen, which in one embodiment is enabled by touching the display screen, for example, with a stylus to generate the character or activate the indicated command or function. Such display screens may include one or more touch interfaces, including a touchscreen. A non-exhaustive list of touchscreens includes, for example, resistive touchscreens, capacitive touchscreens, projected capacitive touchscreens, infrared touchscreens and surface acoustic wave (SAW) touchscreens.

Physical and software keys can be combined in many different ways as appreciated by those skilled in the art. In one embodiment, physical and software keys are combined such that the plurality of enabled keys for a particular application or feature of the handheld electronic device 300 is shown on the display screen 322 in the same configuration as the physical keys. Thus, the desired character, command or function is obtained by depressing the physical key corresponding to the character, command or function displayed at a corresponding position on the display screen, rather than touching the display screen 322. To aid the user, indicia for the characters, commands and/or functions most frequently used are preferably positioned on the physical keys and/or on the area around or between the physical keys. In this manner, the user can more readily associate the correct physical key with the character, command or function displayed on the display screen 322.

The various characters, commands and functions associated with keyboard typing in general are traditionally arranged using various conventions. The most common of these in the United States, for instance, is the QWERTY keyboard layout. Others include the QWERTZ, AZERTY, and Dvorak keyboard configurations of the English-language alphabet.

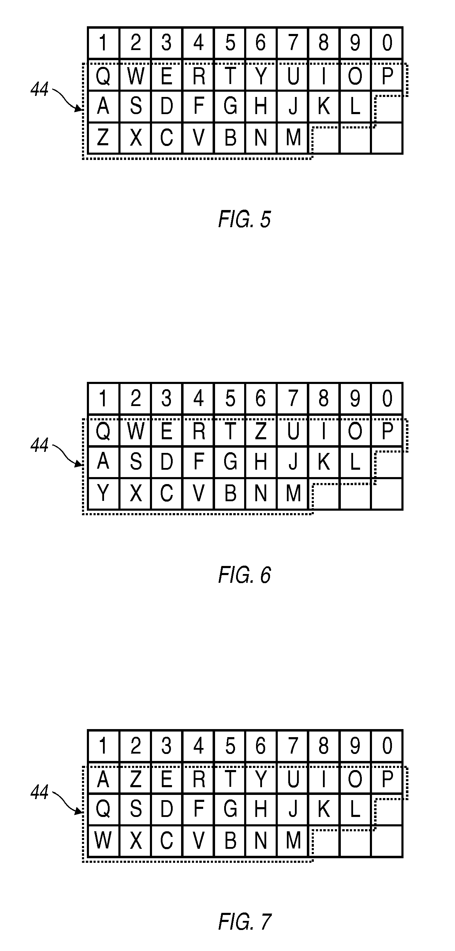

The QWERTY keyboard layout is the standard English-language alphabetic key arrangement 44 (see FIG. 5). In this configuration, Q, W, E, R, T and Y are the letters on the top left, alphabetic row. It was designed by Christopher Sholes, who invented the typewriter. The keyboard layout was organized by him to prevent people from typing too fast and jamming the keys. The QWERTY layout was included in the drawing for Sholes' patent application in 1878.

The QWERTZ keyboard layout is normally used in German-speaking regions. This alphabetic key arrangement 44 is shown in FIG. 6. In this configuration, Q, W, E, R, T and Z are the letters on the top left, alphabetic row. It differs from the QWERTY keyboard layout by exchanging the "Y" with a "Z". This is because "Z" is a much more common letter than "Y" in German and the letters "T" and "Z" often appear next to each other in the German language.

The AZERTY keyboard layout is normally used in French-speaking regions. This alphabetic key arrangement 44 is shown in FIG. 7. In this configuration, A, Z, E, R, T and Y are the letters on the top left, alphabetic row. It is similar to the QWERTY layout, except that the letters Q and A are swapped, the letters Z and W are swapped, and the letter M is in the middle row instead of the bottom one.

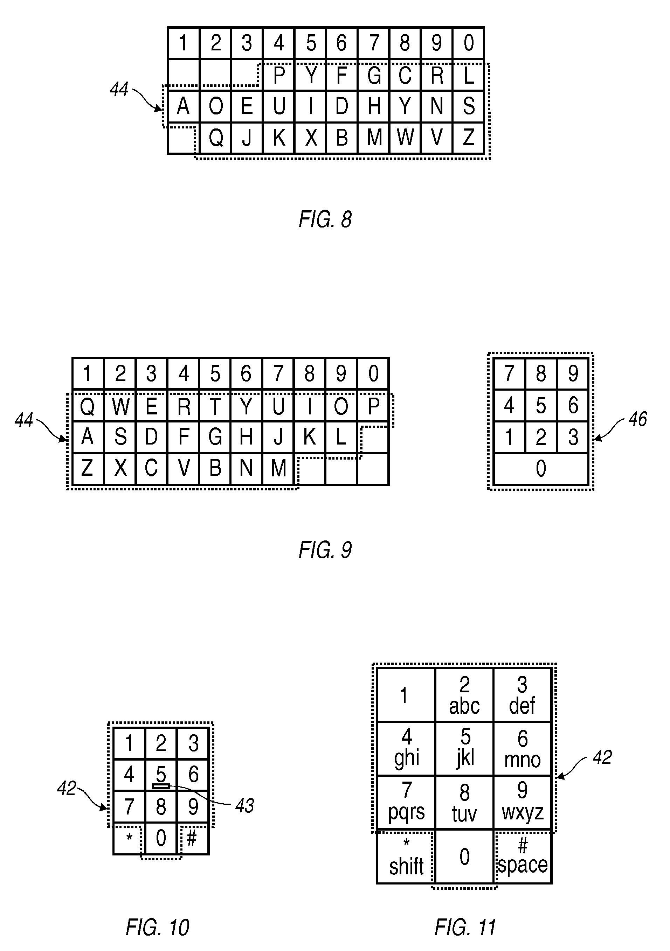

The Dvorak keyboard layout was designed in the 1930s by August Dvorak and William Dealey. This alphabetic key arrangement 44 is shown in FIG. 8. It was developed to allow a typist to type faster. About 70% of words are typed on the home row compared to about 32% with a QWERTY keyboard layout, and more words are typed using both hands. It is said that in eight hours, fingers of a QWERTY typist travel about 16 miles, but only about 1 mile for the Dvorak typist.

Alphabetic key arrangements in full keyboards and typewriters are often presented along with numeric key arrangements. An exemplary numeric key arrangement is shown in FIGS. 5-8 where the numbers 1-9 and 0 are positioned above the alphabetic keys. In another known numeric key arrangement, numbers share keys with the alphabetic characters, such as the top row of the QWERTY keyboard. Yet another exemplary numeric key arrangement is shown in FIG. 9, where a numeric keypad 46 is spaced from the alphabetic/numeric key arrangement. The numeric keypad 46 includes the numbers "7", "8", "9" arranged in a top row, "4", "5", "6" arranged in a second row, "1", "2", "3" arranged in a third row, and "0" in a bottom row, consistent with what may be found on a known "ten-key" computer keyboard keypad. Additionally, a numeric phone key arrangement 42 is also known, as shown in FIG. 10.

As shown in FIG. 10, the numeric phone key arrangement 42 may also utilize a surface treatment on the surface of the center "5" key. This surface treatment is such that the surface of the key is distinctive from the surface of other keys. Preferably the surface treatment is in the form of a raised bump or recessed dimple 43. This bump or dimple 43 is typically standard on telephones and is used to identify the "5" key through touch alone. Once the user has identified the "5" key, it is possible to identify the remainder of the phone keys through touch alone because of their standard placement. The bump or dimple 43 preferably has a shape and size that is readily evident to a user through touch. An example bump or dimple 43 may be round, rectangular, or have another shape if desired. Alternatively, raised bumps may be positioned on the housing around the "5" key and do not necessarily have to be positioned directly on the key, as known by those of skill in the art.

Handheld electronic devices 300 that include a combined text-entry keyboard and a telephony keyboard are also known. Examples of such mobile communication devices include mobile stations, cellular telephones, wireless personal digital assistants (PDAs), two-way paging devices, and others. Various keyboards are used with such devices depending in part on the physical size of the handheld electronic device 300. Some of these are termed full keyboard, reduced keyboard, and phone key pads.

In embodiments of a handheld electronic device 300 having a full keyboard, only one alphabetic character is associated with each one of a plurality of physical keys. Thus, with an English-language keyboard, there are at least 26 keys in the plurality, one for each letter of the English alphabet. In such embodiments using the English-language alphabet, one of the keyboard layouts described above is usually employed, and with the QWERTY keyboard layout being the most common.

One device that uses a full keyboard for alphabetic characters and incorporates a combined numeric keyboard is shown in FIG. 12. In this device, numeric characters share keys with alphabetic characters on the top row of the QWERTY keyboard. Another device that incorporates a combined alphabetic/numeric keyboard is shown in FIG. 13. This device utilizes numeric characters in a numeric phone key arrangement consistent with the ITU Standard E.161, as shown in FIG. 10. The numeric characters share keys with alphabetic characters on the left side of the keyboard.

In order to further reduce the size of a handheld electronic device 300 without making the physical keys or software keys too small, some handheld electronic devices 300 use a reduced keyboard, where more than one character/command/function is associated with each of at least a portion of the plurality of keys. This results in certain keys being ambiguous since more than one character is represented by or associated with the key, even though only one of those characters is typically intended by the user when activating the key.

Thus, certain software usually runs on the processor of these types of handheld electronic devices 300 to determine or predict what letter or word has been intended by the user. Predictive text technologies can also automatically correct common spelling errors. Predictive text methodologies often include a disambiguation engine and/or a predictive editor application. This helps facilitate easy spelling and composition, since the software is preferably intuitive software with a large word list and the ability to increase that list based on the frequency of word usage.

The software preferably also has the ability to recognize character letter sequences that are common to the particular language, such as, in the case of English, words ending in "ing." Such systems can also "learn" the typing style of the user making note of frequently used words to increase the predictive aspect of the software. With predictive editor applications, the display of the device depicts possible character sequences corresponding to the keystrokes that were entered. Typically, the most commonly used word is displayed first. The user may select other, less common words manually, or otherwise. Other types of predictive text computer programs may be utilized with the keyboard arrangement and keyboard described herein, without limitation.

The multi-tap method of character selection has been in use a number of years for permitting users to enter text using a touch screen device or a conventional telephone key pad such as specified under ITU E 1.161, among other devices. Multi-tap requires a user to press a key a varying number of times, generally within a limited period of time, to input a specific letter, thereby spelling the desired words of the message. A related method is the long tap method, where a user depresses the key until the desired character appears on the display out of a rotating series of letters.

A "text on nine keys" type system uses predictive letter patterns to allow a user to ideally press each key representing a letter only once to enter text. Unlike multi-tap which requires a user to indicate a desired character by a precise number of presses of a key, or keystrokes, the "text on nine keys" system uses a predictive text dictionary and established letter patterns for a language to intelligently guess which one of many characters represented by a key that the user intended to enter. The predictive text dictionary is primarily a list of words, acronyms, abbreviations and the like that can be used in the composition of text.

Generally, all possible character string permutations represented by a number of keystrokes entered by a user are compared to the words in the predictive text dictionary and a subset of the permutations is shown to the user to allow selection of the intended character string. The permutations are generally sorted by likelihood of occurrence which is determined from the number of words matched in the predictive text dictionary and various metrics maintained for these words. Where the possible character string permutations do not match any words in the predictive text dictionary, the set of established letter patterns for a selected language can be applied to suggest the most likely character string permutations, and then require the user to input a number of additional keystrokes in order to enter the desired word.

The keys of reduced keyboards are laid out with various arrangements of characters, commands and functions associated therewith. In regards to alphabetic characters, the different keyboard layouts identified above are selectively used based on a user's preference and familiarity; for example, the QWERTY keyboard layout is most often used by English speakers who have become accustomed to the key arrangement.

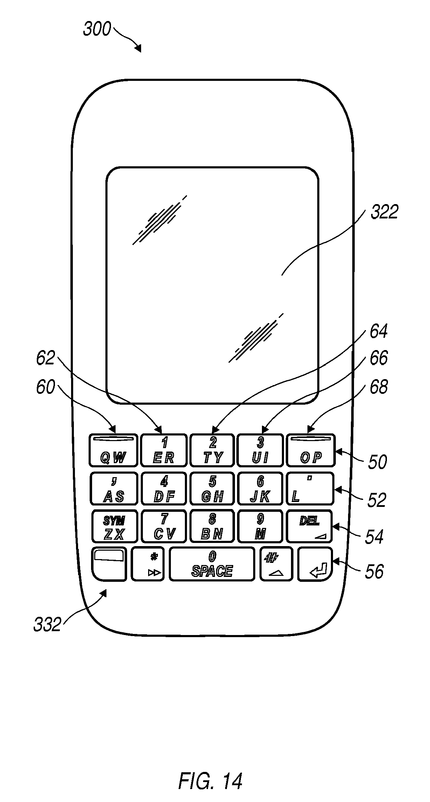

FIG. 14 shows a handheld electronic device 300 that carries an example of a reduced keyboard using the QWERTY keyboard layout on a physical keyboard array of twenty keys comprising five columns and four rows. Fourteen keys are used for alphabetic characters and ten keys are used for numbers. Nine of the ten numbers share a key with alphabetic characters. The "space" key and the number "0" share the same key, which is centered on the device and centered below the remainder of the numbers on the keyboard 332. The four rows include a first row 50, a second row 52, a third row 54, and a fourth row 56. The five columns include a first column 60, a second column 62, a third column 64, a fourth column 66, and a fifth column 68. Each of the keys in the first row 50, second row 52, and third row 54 is uniformly sized while the keys in the fourth, bottom row 56 have different sizes relative to one another and to the keys in the first three rows 50, 52, 54. The rows and columns are straight, although the keys in the fourth row 56 do not align completely with the columns because of their differing sizes. The columns substantially align with the longitudinal axis x-x of the device 300.

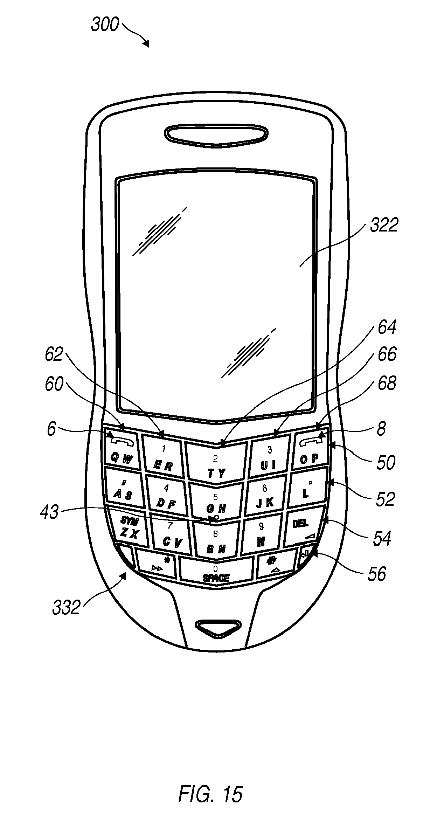

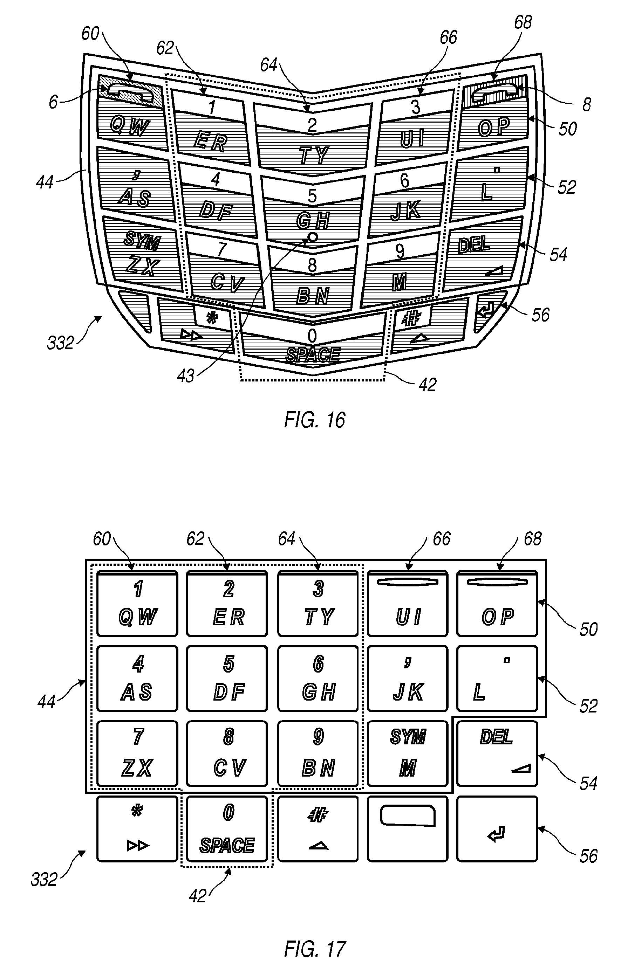

FIG. 15 shows a handheld electronic device 300 that has an example physical keyboard array of twenty keys, with five columns and four rows. A detailed view of the keyboard 332 is presented in FIG. 16. Fourteen keys on the keyboard 332 are associated with alphabetic characters and ten keys are associated with numbers. The four rows include a first row 50, a second row 52, a third row 54, and a fourth row 56. The five columns include a first column 60, a second column 62, a third column 64, a fourth column 66, and a fifth column 68. Many of the keys have different sizes than the other keys, and the rows are non-linear. In particular, the rows are V-shaped, with the middle key in the third column 64 representing the point of the V. The columns are generally straight, but the outer two columns 60, 62, 66, 68 angle inwardly toward the middle column 64. To readily identify the phone user interface (the second user interface), the numeric phone keys 0-9 include a color scheme that is different from that of the remaining keys associated with the QWERTY key arrangement.

In this example, the color scheme of the numeric phone keys has a two tone appearance, with the upper portion of the numeric keys being a first color and the lower portion of the numeric keys being a second color. In the example, the upper portion of the keys is white with blue letters and the lower portion of the keys is blue with white letters. Most of the remaining keys associated with the QWERTY key arrangement are predominantly the second, blue color with white lettering. The first color may be lighter than the second color, or darker than the second color. In addition, the keyboard 332 includes a "send" key 6 and an "end" key 8. The "send" key 6 is positioned in the upper left corner of the keyboard 332 and the "end" key 8 is positioned in the upper right corner. The "send" key 6 and "end" key 8 may have different color schemes than the remainder of the keys in order to distinguish them from other keys. In addition, the "send" and "end" keys 6, 8 may have different colors from one another. In the example shown, the "send" key 6 is green and the "end" key 8 is red. Different colors may be utilized, if desired.

FIG. 17 shows a similar format for the reduced QWERTY arrangement of alphabetic characters 44 as presented in FIG. 14, but the numeric phone key arrangement 42 is positioned in the first 60, second 62, and third 64 columns instead of being centered on the keyboard 332. The first row 50 of keys includes in order the following key combinations for the text entry and telephony mode: "QW/1", "ER/2", "TY/3", "UI", and "OP". The second row 52 includes the following key combinations in order: "AS/4", "DF/5", "GH/6", "JK/,", and "L/.". The third row 54 includes the following key combinations in order: "ZX/7", "CV/8", "BN/9", "M/sym" and "backspace/delete". The fourth row 56 includes the following key combinations in order: "next/*", "space/0", "shift/#", "alt" and "return/enter". The keys in each of the rows are of uniform size and the rows and columns are straight.

Another embodiment of a reduced alphabetic keyboard is found on a standard phone keypad. Most handheld electronic devices 300 having a phone key pad also typically include alphabetic key arrangements overlaying or coinciding with the numeric keys as shown in FIG. 11. Such alphanumeric phone keypads are used in many, if not most, traditional handheld telephony mobile communication devices such as cellular handsets.

As described above, the International Telecommunications Union ("ITU") has established phone standards for the arrangement of alphanumeric keys. The standard phone numeric key arrangement shown in FIGS. 10 (no alphabetic letters) and 11 (with alphabetic letters) corresponds to ITU Standard E.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994. Regarding the numeric arrangement, it can be aptly described as a top-to-bottom ascending order three-by-three-over-zero pattern.

The table below identifies the alphabetic characters associated with each number for some other phone keypad conventions.

| Number on Key | ITU E.161 | Australia | Mobile Phone Keypad | | |
|---|---|---|---|---|---|
| | | | #1 | #11 (Europe) | #111 (Europe) |
| 1 | | QZ | | ABC | ABC |
| 2 | ABC | ABC | ABC | DEF | DEF |
| 3 | DEF | DEF | DEF | GHI | GHI |
| 4 | GHI | GHI | GHI | JKL | JKL |
| 5 | JKL | JKL | JKL | MNO | MNO |
| 6 | MNO | MNO | MN | PQR | PQR |
| 7 | PQRS | PRS | PRS | STU | STU |
| 8 | TUV | TUV | TUV | ŰVW | VWX |
| 9 | WXYZ | WXY | WXY | XYZ | YZ |
| 0 | | | OQZ | | |

It should also be appreciated that other alphabetic character and number combinations can be used beyond those identified above when deemed useful to a particular application.

As noted earlier, multi-tap software has been in use for a number of years permitting users to enter text using a conventional telephone key pad such as specified under ITU E 1.161 or on a touch screen display, among other devices. Multi-tap requires a user to press a key a varying number of times, generally within a limited period of time, to input a specific letter associated with the particular key, thereby spelling the desired words of the message. A related method is the long tap method, where a user depresses the key until the desired character appears on the display.

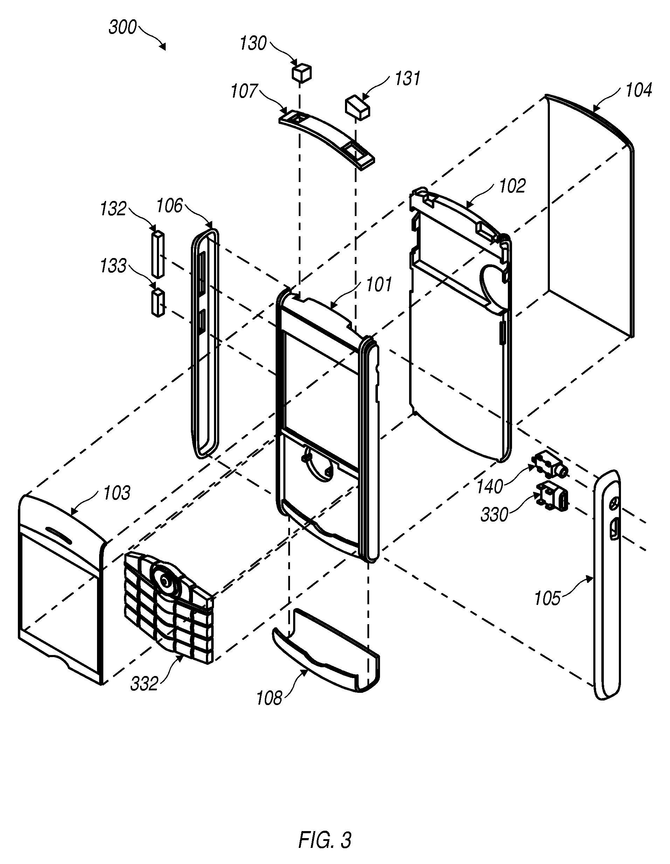

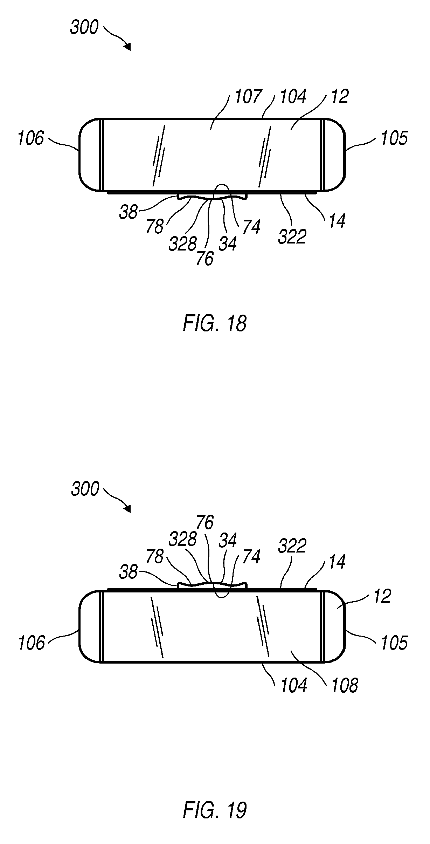

An exemplary handheld electronic device 300 is shown in the assembly drawing of FIG. 3 and its cooperation in a wireless network is exemplified in the block diagram of FIG. 18. These figures are exemplary only, and those persons skilled in the art will appreciate the additional elements and modifications necessary to make the device work in particular network environments.

FIG. 3 is an exploded view showing some of the typical components found in the assembly of the handheld electronic device 300. The construction of the device benefits from various manufacturing simplifications. The internal components are constructed on a single PCB (printed circuit board) 102. The keyboard 332 is constructed from a single piece of material, and in a preferred embodiment is made from plastic. The keyboard 332 sits over dome switches (not shown) located on the PCB 102 in a preferred embodiment. One switch is provided for every key on the keyboard in the preferred embodiment, but in other embodiments, more than one switch or less than one switch per key are possible configurations. The support frame 101 holds the keyboard 332 and navigation tool 328 in place above the PCB 102. The support frame 101 also provides an attachment point for the display (not shown). A lens 103 covers the display to prevent damage. When assembled, the support frame 101 and the PCB 102 are fixedly attached to each other and the display (322) is positioned between the PCB 102 and support frame 101.

A serial port (preferably a Universal Serial Bus port) 330 and an earphone jack 140 are fixedly attached to the PCB 102 and further held in place by right side element 105. Buttons 130, 131, 132, 133 are attached to switches (not shown), which are connected to the PCB 102.

Final assembly involves placing the top piece 107 and bottom piece 108 in contact with support frame 101. Furthermore, the assembly interconnects right side element 105 and left side element 106 with the support frame 101, PCB 102, and lens 103. These side elements 105, 106 provide additional protection and strength to the support structure of the device 300. In a preferred embodiment, backplate 104 is removably attached to the other elements of the device.

The block diagram of FIG. 4, representing the communication device 300 interacting in the communication network 319, shows the device's 300 inclusion of a microprocessor 338 which controls the operation of the device 300. The communication subsystem 311 performs all communication transmission and reception with the wireless network 319. The microprocessor 338 further connects with an auxiliary input/output (I/O) subsystem 328, a serial port (preferably a Universal Serial Bus port) 330, a display 322, a keyboard 332, a speaker 334, a microphone 336, random access memory (RAM) 326, and flash memory 324. Other communications subsystems 340 and other device subsystems 342 are generally indicated as connected to the microprocessor 338 as well. An example of a communication subsystem 340 is that of a short range communication subsystem such as BLUETOOTH® communication module or an infrared device and associated circuits and components. Additionally, the microprocessor 338 is able to perform operating system functions and preferably enables execution of software applications on the communication device 300.

The above described auxiliary I/O subsystem 328 can take a variety of different subsystems including the above described navigation tool 328. As previously mentioned, the navigation tool 328 is an ergonomic cursor navigation controller. Other auxiliary I/O devices can include external display devices and externally connected keyboards (not shown). While the above examples have been provided in relation to the auxiliary I/O subsystem, other subsystems capable of providing input or receiving output from the handheld electronic device 300 are considered within the scope of this disclosure.

In a preferred embodiment, the communication device 300 is designed to wirelessly connect with a communication network 319. Some communication networks that the communication device 300 may be designed to operate on require a subscriber identity module (SIM) or removable user identity module (RUIM). Thus, a device 300 intended to operate on such a system will include SIM/RUIM interface 344 into which the SIM/RUIM card (not shown) may be placed. The SIM/RUIM interface 344 can be one in which the SIM/RUIM card is inserted and ejected.

In an exemplary embodiment, the flash memory 324 is enabled to provide a storage location for the operating system, device programs, and data. While the operating system in a preferred embodiment is stored in flash memory 324, the operating system in other embodiments is stored in read-only memory (ROM) or similar storage element (not shown). As those skilled in the art will appreciate, the operating system, device application or parts thereof may be loaded in RAM 326 or other volatile memory.

In a preferred embodiment, the flash memory 324 contains programs/applications 358 for execution on the device 300 including an address book 352, a personal information manager (PIM) 354, and the device state 350. Furthermore, programs 358 and other information 356 can be segregated upon storage in the flash memory 324 of the device 300. However, another embodiment of the flash memory 324 utilizes a storage allocation method such that a program 358 is allocated additional space in order to store data associated with such program. Other known allocation methods exist in the art and those persons skilled in the art will appreciate additional ways to allocate the memory of the device 300.

In a preferred embodiment, the device 300 is pre-loaded with a limited set of programs that enable it to operate on the communication network 319. Another program that can be preloaded is a PIM 354 application that has the ability to organize and manage data items including but not limited to email, calendar events, voice messages, appointments and task items. In order to operate efficiently, memory 324 is allocated for use by the PIM 354 for the storage of associated data. In a preferred embodiment, the information that PIM 354 manages is seamlessly integrated, synchronized and updated through the communication network 319 with a user's corresponding information on a remote computer (not shown). The synchronization, in another embodiment, can also be performed through the serial port 330 or other short range communication subsystem 340. Other applications may be installed through connection with the wireless network 319, serial port 330 or via other short range communication subsystems 340.

When the device 300 is enabled for two-way communication within the wireless communication network 319, it can send and receive signals from a mobile communication service. Examples of communication systems enabled for two-way communication include, but are not limited to, the MOBITEX mobile communication system, DATATAC mobile communication system, the GPRS (General Packet Radio Service) network, the UMTS (Universal Mobile Telecommunication Service) network, the EDGE (Enhanced Data for Global Evolution) network, and the CDMA (Code Division Multiple Access) network and those networks generally described as packet-switched, narrowband, data-only technologies mainly used for short burst wireless data transfer.

For the systems listed above, the communication device 300 must be properly enabled to transmit and receive signals from the communication network 319. Other systems may not require such identifying information. A GPRS, UMTS, and EDGE require the use of a SIM (Subscriber Identity Module) in order to allow communication with the communication network 319. Likewise, most CDMA systems require the use of a RUIM (Removable Identity Module) in order to communicate with the CDMA network. The RUIM and SIM card can be used in multiple different communication devices 300. The communication device 300 may be able to operate some features without a SIM/RUIM card, but it will not be able to communicate with the network 319. In some locations, the communication device 300 will be enabled to work with special services, such as "911" emergency, without a SIM/RUIM or with a non-functioning SIM/RUIM card. A SIM/RUIM interface 344 located within the device allows for removal or insertion of a SIM/RUIM card (not shown). This interface 344 can be configured like that of a disk drive or a PCMCIA slot or other known attachment mechanism in the art. The SIM/RUIM card features memory and holds key configurations 351, and other information 353 such as identification and subscriber related information. Furthermore, a SIM/RUIM card can be enabled to store information about the user including identification, carrier and address book information. With a properly enabled communication device 300, two-way communication between the communication device 300 and communication network 319 is possible.

If the communication device 300 is enabled as described above or the communication network 319 does not require such enablement, the two-way communication enabled device 300 is able to both transmit and receive information from the communication network 319. The transfer of communication can be from the device 300 or to the device 300. In order to communicate with the communication network 319, the device 300 in a preferred embodiment is equipped with an integral or internal antenna 318 for transmitting signals to the communication network 319. Likewise the communication device 300 in the preferred embodiment is equipped with another antenna 316 for receiving communication from the communication network 319. These antennae 316, 318 in another preferred embodiment are combined into a single antenna (not shown). As one skilled in the art would appreciate, the antenna or antennae 316, 318 in another embodiment are externally mounted on the device 300.

When equipped for two-way communication, the communication device 300 features a communication subsystem 311. As is well known in the art, this communication subsystem 311 is modified so that it can support the operational needs of the device 300. The subsystem 311 includes a transmitter 314 and receiver 312 including the associated antenna or antennae 316, 318 as described above, local oscillators (LOs) 313, and a processing module 320 which in a preferred embodiment is a digital signal processor (DSP) 320.

A signal received by the communication device 300 is first received by the antenna 316 and then input into a receiver 312, which in a preferred embodiment is capable of performing common receiver functions including signal amplification, frequency down conversion, filtering, channel selection and the like, and analog to digital (A/D) conversion. The A/D conversion allows the DSP 320 to perform more complex communication functions such as demodulation and decoding on the signals that are received by DSP 320 from the receiver 312. The DSP 320 is also capable of issuing control commands to the receiver 312. An example of a control command that the DSP 320 is capable of sending to the receiver 312 is gain control, which is implemented in automatic gain control algorithms implemented in the DSP 320. Likewise, the communication device 300 is capable of transmitting signals to the communication network 319. The DSP 320 communicates the signals to be sent to the transmitter 314 and further communicates control functions, such as the above described gain control. The signal is emitted by the device 300 through an antenna 318 connected to the transmitter 314.

It is contemplated that communication by the device 300 with the wireless network 319 can be any type of communication that both the wireless network 319 and device 300 are enabled to transmit, receive and process. In general, these can be classified as voice and data. Voice communication is communication in which signals for audible sounds are transmitted by the device 300 through the communication network 319. Data is all other types of communication that the device 300 is capable of performing within the constraints of the wireless network 319.

In the instance of voice communications, voice transmissions that originate from the communication device 300 enter the device 300 though a microphone 336. The microphone 336 communicates the signals to the microprocessor 338 for further conditioning and processing. The microprocessor 338 sends the signals to the DSP 320 which controls the transmitter 314 and provides the correct signals to the transmitter 314. Then, the transmitter 314 sends the signals to the antenna 318, which emits the signals to be detected by a communication network 319. Likewise, when the receiver 312 obtains a signal from the receiving antenna 316 that is a voice signal, it is transmitted to the DSP 320 which further sends the signal to the microprocessor 338. Then, the microprocessor 338 provides a signal to the speaker 334 of the device 300 and the user can hear the voice communication that has been received. The device 300 in a preferred embodiment is enabled to allow for full duplex voice transmission.

In another embodiment, the voice transmission may be received by the communication device 300 and translated as text to be shown on the display screen 322 of the communication device 300. The communication device 300 is also capable of retrieving messages from a voice messaging service operated by the communication network operator. In a preferred embodiment, the device 300 displays information in relation to the voice message, such as the number of voice messages or an indication that a new voice message is present on the operating system.

In a preferred embodiment, the display 322 of the communication device 300 provides an indication about the identity of an incoming call, duration of the voice communication, telephone number of the communication device, call history, and other related information. It should be appreciated that the above described embodiments are given as examples only and one skilled in the art may effect alterations, modifications and variations to the particular embodiments without departing from the scope of the application.

As stated above, the communication device 300 and communication network 319 can be enabled to transmit, receive and process data. Several different types of data exist and some of these types of data will be described in further detail. One type of data communication that occurs over the communication network 319 includes electronic mail (email) messages. Typically an email is text based, but can also include other types of data such as picture files, attachments and html. While these are given as examples, other types of messages are considered within the scope of this disclosure as well.

When the email originates from a source outside of the device and is communicated to the device 300, it is first received by the receiving antenna 316 and then transmitted to the receiver 312. From the receiver 312, the email message is further processed by the DSP 320, and it then reaches the microprocessor 338. The microprocessor 338 executes instructions as indicated from the relevant programming instructions to display, store or process the email message as directed by the program. In a similar manner, once an email message has been properly processed by the microprocessor 338 for transmission to the communication network 319, it is first sent to the DSP 320, which further transmits the email message to the transmitter 314.
The transmitter 314 processes the email message and transmits it to the transmission antenna 318, which broadcasts a signal to be received by a communication network 319. While the above has been described generally, those skilled in this art will appreciate those modifications which are necessary to enable the communication device 300 to properly transmit the email message over a given communication network 319.

Furthermore, the email message may instead be transmitted from the device 300 via a serial port 330, another communication port 340, or other wireless communication ports 340. The user of the device 300 can generate a message to be sent using the keyboard 332 and/or auxiliary I/O 328, and the associated application to generate the email message. Once the email message is generated, the user may execute a send command which directs the email message from the communication device 300 to the communication network 319. In an exemplary embodiment, a keyboard 332, preferably an alphanumeric keyboard, is used to compose the email message. In a preferred embodiment, an auxiliary I/O device 328 is used in addition to the keyboard 332.

While the above has been described in relation to email messages, one skilled in the art could easily modify the procedure to function with other types of data such as SMS text messages, internet websites, videos, instant messages, programs and ringtones. Once the data is received by the microprocessor 338, the data is placed appropriately within the operating system of the device 300. This might involve presenting a message on the display 322 which indicates the data has been received or storing it in the appropriate memory 324 on the device 300. For example, a downloaded application such as a game will be placed into a suitable place in the flash memory 324 of the device 300. The operating system of the device 300 will also allow for appropriate access to the new application as downloaded.

Exemplary embodiments have been described hereinabove regarding handheld electronic devices 300 and wireless handheld communication devices 300 as well as the communication networks within which they cooperate. It should be appreciated, however, that a focus of the present disclosure is the enablement of ergonomic cursor navigation controller for a handheld mobile communication device.

## Claims

1. An ergonomic cursor navigation controller assembly for a handheld mobile communication device, comprising:
a navigation button having a ringed and waved upper surface; and
said navigation button configured to direct motion of a cursor about an electronic graphical display of said handheld mobile communication device and said ringed and waved upper surface comprising a plurality of peaks and valleys.

2. The ergonomic cursor navigation controller assembly of claim 1, further comprising an execution button disposed within a perimeter defined by said ringed and waved upper surface, said execution button being configured to actuate execution of a function selected with said navigation button.

3. The ergonomic cursor navigation controller assembly of claim 1, wherein at least a pair of said peaks are separated from one another and spaced apart by an angle of approximately ninety degrees

4. The ergonomic cursor navigation controller assembly of claim 1, wherein said ringed and waved surface comprises at least four peaks and at least four valleys.

5. The ergonomic cursor navigation controller assembly of claim 4, wherein said peaks of said navigation button are oriented in a corresponding axial relationship with said electronic graphical display such that actuation of one of said peaks causes corresponding movement of said cursor displayed on said electronic graphical display in one of upward, downward, leftward and rightward directions.

6. The ergonomic cursor navigation controller assembly of claim 4, wherein an upper surface of said peaks is disposed at a higher elevation relative to an upper surface of said execution button.

7. The ergonomic cursor navigation controller assembly of claim 4, wherein an upper surface of said peaks is disposed at a higher elevation relative to an upper surface of an input button of the device.

8. The ergonomic cursor navigation controller assembly of claim 4, wherein an upper surface of said peaks is disposed at a higher elevation relative to an upper surface of a keyboard button of the device.

9. The ergonomic cursor navigation controller assembly of claim 2, wherein the upper surface of said valleys is disposed at a lower elevation relative to an upper surface of said execution button.

10. The ergonomic cursor navigation controller assembly of claim 4, wherein said ringed and waved upper surface is ellipse-shaped.

11. The ergonomic cursor navigation controller assembly of claim 4, wherein said ringed and waved upper surface is circular in shape.

12. The ergonomic cursor navigation controller assembly of claim 4, wherein said ringed and waved upper surface is substantially rectangular in shape.

13. The ergonomic cursor navigation controller assembly of claim 4, wherein said ringed and waved upper surface comprises a raised annulus that protrudes from a base portion of said navigation button.

14. The ergonomic cursor navigation controller assembly of claim 13, wherein side walls of said raised annulus protrude perpendicularly from said base portion of said navigation button.

15. The ergonomic cursor navigation controller assembly of claim 13, wherein said raised annulus is ellipse-shaped.

16. The ergonomic cursor navigation controller assembly of claim 1, wherein said ringed and waved upper surface is configured for rotation relative to a housing of said handheld mobile communication device, said rotation thereof causing corresponding movement of said cursor displayed on said electronic graphical display in one of upward and downward directions.

17. The ergonomic cursor navigation controller assembly of claim 1, wherein said ringed and waved upper surface has a smooth texture.

18. The ergonomic cursor navigation controller assembly of claim 1, wherein said ringed and waved upper surface is disposed on a front side of said handheld mobile communication device.

19. The ergonomic cursor navigation controller assembly of claim 1, wherein said handheld communication device transmits data to, and receives data from a communication network utilizing radio frequency signals.

20. The ergonomic cursor navigation controller assembly of claim 19, wherein the data transmitted between said handheld communication device and the communication network supports voice and textual messaging.

21. The ergonomic cursor navigation controller assembly of claim 1, wherein said handheld communication device comprises a lighted display located above a keyboard suitable for accommodating textual input to the handheld communication device when said handheld communication device is in an operable configuration, said ergonomic cursor navigation controller assembly being located essentially between the display and keyboard in the operable configuration.

22. The ergonomic cursor navigation controller assembly of claim 21, said keyboard comprising a plurality of keys with which alphabetic letters are associated, one letter per key.

23. The ergonomic cursor navigation controller assembly of claim 22, wherein said alphabetic letters are configured in one of a QWERTY, QWERTZ, and AZERTY layout.

24. The ergonomic cursor navigation controller assembly of claim 23, said keyboard comprising a plurality of keys with which alphabetic letters are associated and wherein at least a portion of the individual keys have multiple letters associated therewith.

25. The ergonomic cursor navigation controller assembly of claim 24, wherein said alphabetic letters are configured in one of a QWERTY, QWERTZ, and AZERTY layout.

26. The ergonomic cursor navigation controller of claim 1, wherein one or more of said peaks comprise a textured surface.
